# EUROPÄISCHE PATENTSCHRIFT

(11) **EP 4 047 276 B1**
(45) Veröffentlichungstag und Bekanntmachung des Hinweises auf die Patenterteilung: **29.05.2024**
(21) Anmeldenummer: 22154498.4
(22) Anmeldetag: 01.02.2022
(51) Int. Cl.: F24D 3/14, F24D 13/02

(54) **HALTESCHIENE FÜR FLÄCHENHEIZUNGSROHRE**
HOLDING RAIL FOR FLAT HEATING PIPES
RAIL DE MAINTIEN POUR TUBES DE CHAUFFAGE AU SOL

(30) Priorität: 22.02.2021 AT 5002621 U
(43) Veröffentlichungstag der Anmeldung: 24.08.2022
(73) Patentinhaber: KE KELIT GmbH, 4020 Linz (AT)
(72) Erfinder: Ratschmann, Elmar, 4202 Hellmonsödt (AT)
(74) Vertreter: Hübscher & Partner Patentanwälte GmbH

(56) Entgegenhaltungen:
- EP-A2- 1 619 005
- DE-A1- 3 101 717
- DE-A1- 3 108 573
- DE-A1-102005 039 648

## Beschreibung

Die Erfindung bezieht sich auf eine Halteschiene für Flächenheizungsrohre gemäß dem Oberbegriff des Anspruchs 1. Solch eine Halteschiene ist beispielsweise in DE 31 01 717 A1 offenbart.

Im Zusammenhang mit der Klimatisierung von Räumen mithilfe von Flächenheizungen sind diverse Halteschienen für die das Wärmeträgerfluid führenden Rohrleitungen bekannt, wobei die Halteschienen samt Rohrleitung in einer auszuhärtenden Betonvergussmasse eingebettet werden. Beispielsweise offenbart die EP 2679923 B1 Halteschienen, die zwei parallel in Schienenlängsrichtung mit Abstand zueinander verlaufende Längsprofile umfassen und die gemeinsam mehrere sich jeweils quer zur Schienenlängsrichtung erstreckende, nach oben hin offene Rohraufnahmen ausbilden. Nachteilig an derartigen Halteschienen ist jedoch der Umstand, dass eine gleichmäßige Verteilung der flüssigen Betonvergussmasse beim Einbetten bedingt durch die vorgegebene Schienengeometrie kaum erreicht wird, sodass es zu einer Lunkerbildung bzw. schlimmstenfalls zu Spannungsrissen im ausgehärteten Beton kommen kann.

Der Erfindung liegt somit die Aufgabe zugrunde, eine Halteschiene der eingangs geschilderten Art so auszugestalten, dass trotz einfacher Fertigungs-und Montagebedingungen Lunkerbildungen und Spannungsrisse im ausgehärteten Beton weitgehend vermieden werden.

Die Erfindung löst die gestellte Aufgabe mit den Merkmalen des Anspruchs 1.

Der Erfindung liegt die Erkenntnis zugrunde, dass sich das Strömungsverhalten des eingegossenen Betons auf vorteilhafte Weise beeinflussen lässt, wenn der den Abstandshaltern zugeordnete Profilabschnitt der Halteschiene stetig wellenförmig verläuft, d.h. eine stetige Wellenform mit Wellenbuckeln und Wellentälern annimmt, sodass insbesondere Ecken bzw. spitz zulaufende Konturen vermieden werden. Das verbesserte Strömungsverhalten beim Vergießen der Halteschienen führt dazu, dass eine homogenere Verteilung der Betonvergussmasse in der beim Vergießen zum Einsatz kommenden Schalung erreicht wird, sodass letztlich Spannungsrisse im ausgehärteten Beton weitgehend vermieden werden können. Die Wellenbuckel bilden erfindungsgemäß die Abstandshalter, wobei die Wellenbuckel beim Vergussvorgang jeweils im Bereich der entsprechenden Wellenbuckelscheitel auf der Schalung aufliegen. Vorzugsweise ist jeder Rohraufnahme genau ein Wellenbuckel zugeordnet. Dabei können der Schmiegekreis der jeweiligen Rohraufnahme und der Schmiegekreis des ihr zugeordneten Wellenbuckels im Wesentlichen denselben Kreismittelpunkt aufweisen. Für besonders günstige Herstellungsbedingungen ist die erfindungsgemäße Halteschiene vorzugsweise als einstückiges Kunststoffbauteil gefertigt.

Erfindungsgemäß wird Verteilung der Betonvergussmasse bei gleichzeitiger Schienenmaterialeinsparung bewirkt, indem jede Rohraufnahme in Schienenlängsrichtung durch genau zwei Profilquerverbinder begrenzt ist, die jeweils eine nach innen in die Rohraufnahmen vorragende federnde Rastnase aufweisen. Die Profilquerverbinder sind vorzugsweise dergestalt, dass die Ausbildung einer Auflagefläche unterhalb eines von der Rohraufnahme aufgenommen Rohres vermieden wird, d.h. dass jener Bereich unterhalb des Rohres frei bleibt und die Betonvergussmasse auch in diesen Freiraum fließen kann. Dazu kann es insbesondere vorgesehen sein die zwei parallel in Schienenlängsrichtung mit Abstand zueinander verlaufenden Längsprofile ausschließlich über die Profilquerverbinder zu verbinden, die beiden Längsprofile also nicht über ein zusätzliches Längsprofil zu verbinden.

Damit auch dünnflüssigere Anteile der Betonvergussmasse die Halteschiene beim Vergussvorgang unterlaufen können, sodass eine homogene Verteilung der Betonvergussmasse weiter begünstigt wird, empfiehlt es sich, dass die durch die Wellenbuckel gebildeten Abstandshalter jeweils im Bereich des Wellenbuckelscheitels einen vorzugsweise zylinderförmigen Auflagekörper aufweisen. Grundsätzlich kann der Auflagekörper aber auch andere Querschnittsformen aufweisen. Besonders bevorzugt bildet der Auflagekörper im Wesentlichen eine Auflagescheibe. Dies bedeutet, dass der Durchmesser des Abstandshalters groß ist im Vergleich zu dessen Höhe.

Um bei einfachen Fertigungsbedingungen für die Halteschienen gleichzeitig deren Montagebedingungen weiter zu verbessern, wird vorgeschlagen, dass die Längsprofile rohraufnahmenseitig in Schienenlängsrichtung mehrere Befestigungslöcher für Befestigungsmittel, insbesondere zur Befestigung der Halteschiene an einer Schalung, aufweisen. Die Lochachse der Befestigungslöcher verläuft vorzugsweise sowohl orthogonal zur Schienenlängsrichtung, als auch orthogonal zur Rohraufnahmelängsrichtung. Zufolge dieser Maßnahmen wird eine einfach vorzunehmende Befestigung der Halteschienen auf der Schalung, beispielswiese durch Edelstahlnägel als Befestigungsmittel, ermöglicht.

Damit die erfindungsgemäßen Halteschienen an unterschiedliche Montageanforderungen angepasst werden können, ist es vorteilhaft, dass diese auf einfache Weise lösbar miteinander verbunden werden können. Beispielsweise kann an einem freien Ende der Halteschiene ein Rastverbinder zum form- und kraftschlüssigen Hintergreifen einer Rastaufnahme einer benachbarten Halteschiene vorgesehen sein, wohingegen am gegenüberliegenden freien Ende eine von einem Rastverbinder einer benachbarten Halteschiene form- und kraftschlüssig hintergreifbare Rastaufnahme vorgesehen ist. Vorzugsweise weist der Rastverbinder einen im Wesentlichen T-förmigen Kopf auf, wobei die Rastaufnahme dementsprechend ein dazu korrespondierendes T-Profil ausbildet. Erfindungsgemäße Halteschienen können somit auf einfache Weise miteinander verbunden werden, indem diese quer zur Schienenlängsrichtung und quer zur Rohraufnahmelängsrichtung aufeinandergeschoben werden.

Um ein ansprechenderes Erscheinungsbild des ausgehärteten Betons zu ermöglichen, sodass die erfindungsgemäßen Halteschienen auch im Zusammenhang mit Sichtbeton eingesetzt werden können, wird vorgeschlagen, dass die Halteschiene aus einem transluzenten Kunststoff gefertigt ist. Die Halteschiene weist somit keine Eigenfarbe auf und ist daher im ausgehärteten Zustand des Betons auch nicht mehr sichtbar.

Die Funktionalität der erfindungsgemäßen Halteschiene kann weiter erhöht werden, wenn die Längsprofile auf ihrer den Rohraufnahmen gegenüberliegenden Seite zusätzliche, nach unten hin offene Rohraufnahmen, beispielsweise für Kapillarrohre, Kapillarrohrmatten und/oder mit einer elektrischen Heizung ausgestattete Heizrohre umfasst. Beispielsweise kann dadurch ein kombinierter Einsatz von Rohrleitungen und Kapillarrohrmatten ermöglicht werden. Es ist aber auch denkbar, dass die erfindungsgemäßen Halteschienen ausschließlich Kapillarrohrmatten führen, sodass die oberen, von der Raumfläche abgewandten Rohraufnahmen unbesetzt bleiben. Vorzugsweise ist die zusätzliche Rohraufnahme in einem Wellental des wellenförmig verlaufenden Profilabschnittes angeordnet.

Um die Struktur der Halteschiene nicht zu schwächen und ein Eingießen der chien in Beton trotdem bestmöglich zu erlauben, ohne Lufteinschlüsse in Kauf nehmen zu müssen, können die Rohraufnahmen von an den Längsprofilen angesetzten, zwischen zwei Abstandshaltern nach unten weisenden Klemmarmen gebildet sein.

Eine erfindungsgemäße Halteschiene kann insbesondere mit in Rohraufnahmen eingesetzten Kernheizrohren und mit in nach unten hin offene Rohraufnahmen eingesetzten Oberflächenheizrohren ausgestattet sein. Die Kernheizrohre dienen dabei zur Temperierung eines Betonkernes, in welchen die Halteschiene eingegossen ist, insbesondere zum Heizen in kalten und zum Kühlen in warmen Jahreszeiten. In der Übergangszeit zwischen Sommer und Winter, in der die Kernheizung uneffektiv bzw. zu träge ist, kann mit den Oberflächenheizrohren, die besonders Oberflächennahe angeordnet sind, energiearm Strahlungswärme abgegeben werden.

Die in nach unten hin offene Rohraufnahmen eingesetzten Oberflächenheizrohre können Kapillarrohre, Kapillarrohrmatten und/oder mit einer elektrischen Heizung ausgestattete Heizrohre sein. Der Vorteil mit einer elektrischen Heizung ausgestatteter Heizrohre besteht darin, dass diese gegebenenfalls unmittelbar mit Solarstrom betrieben werden können.

In der Zeichnung ist der Erfindungsgegenstand beispielsweise dargestellt. Es zeigen
Fig. 1 einen schematischen Schrägriss einer erfindungsgemäßen Halteschiene in einem Ausschnitt,
Fig. 2 eine Draufsicht zweier nicht miteinander verbundener, erfindungsgemäßer Halteschienen in einem kleineren Maßstab,
Fig. 3 eine der Fig. 2 entsprechende Darstellung, allerdings in verbundenem Zustand, und
Fig. 4 eine schematische Vorderansicht einer erfindungsgemäßen, in eine Betonvergussmasse eingebettete Halteschiene in einem Ausschnitt.

Eine erfindungsgemäße Halteschiene umfasst zwei parallel in Schienenlängsrichtung S mit Abstand zueinander verlaufende Längsprofile 1. Die Längsprofile 1 bilden gemeinsam mehrere sich jeweils quer zur Schienenlängsrichtung S in einer Rohraufnahmelängsrichtung R erstreckende, nach oben hin offene Rohraufnahmen 2 zur Aufnahme von z.B. Flächenheizungsrohren 3 aus. Erfindungsgemäß ist jede Rohraufnahme 2 in Schienenlängsrichtung S durch genau zwei Profilquerverbinder 4 begrenzt, die jeweils eine nach innen in die Rohraufnahmen 2 vorragende federnde Rastnase 5 aufweisen. Damit ist jede Rohraufnahme 2 in Schienenlängsrichtung S von nach innen in die Rohraufnahmen 2 vorragenden Rastnasen 5 begrenzt. Die zwei parallel in Schienenlängsrichtung S mit Abstand zueinander verlaufenden Längsprofile 1 sind quer zur Schienenlängsrichtung S ausschließlich über die Profilquerverbinder 4 verbunden.

Die Längsprofile 1 weisen jeweils an ihrer den Rohraufnahmen 2 gegenüberliegenden Seite einen in Schienenlängsrichtung S gleichmäßig wellenförmig verlaufenden Profilabschnitt 6 mit mehreren Wellenbuckeln 7 und mehreren Wellentälern 8 auf. Die Wellenbuckel 7 bilden jeweils Abstandshalter 9 zur Vorgabe eines Abstandes zwischen den Rohraufnahmen 2 und einer Raumfläche bzw. einer Schalung 10 aus.

Die durch die Wellenbuckel 7 gebildeten Abstandshalter 9 weisen gemäß der gezeigten Ausführungsform jeweils im Bereich des Wellenbuckelscheitels einen vorzugsweise zylinderförmigen Auflagekörper 11 auf. Darüber hinaus umfassen die Längsprofile 1 rohraufnahmenseitig in Schienenlängsrichtung S mehrere Befestigungslöcher 12 für Befestigungsmittel. Die Lochachse der Befestigungslöcher 12 verläuft im vorliegenden Fall sowohl orthogonal zur Schienenlängsrichtung S, als auch orthogonal zur Rohraufnahmelängsrichtung R.

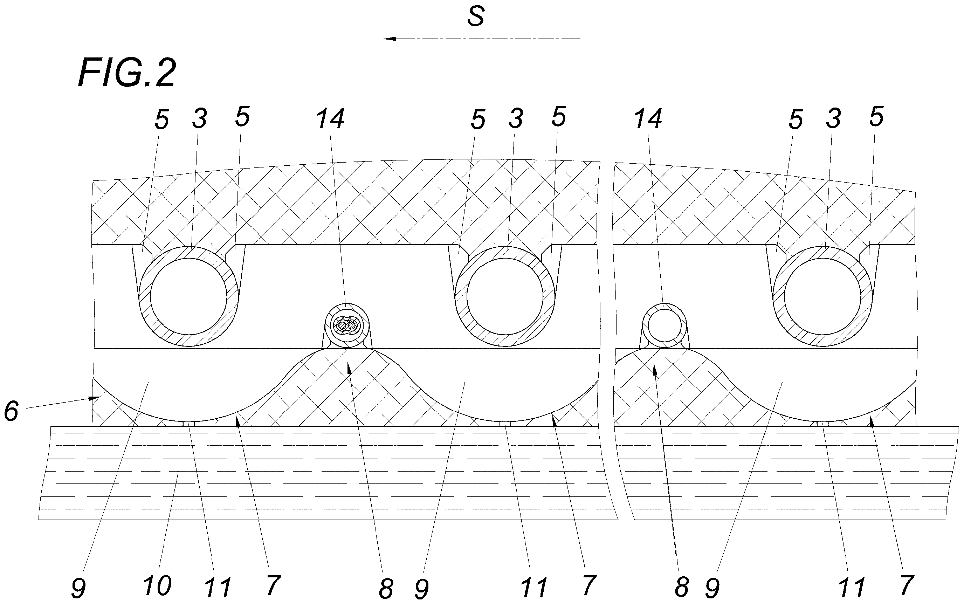

Die Längsprofile weisen außerdem auf ihrer den Rohraufnahmen 2 gegenüberliegenden Seite zusätzliche, nach unten hin offene Rohraufnahmen 13 für Kapillarrohrmatten auf, die in Fig. 2 durch Oberflächenheizrohre 14, insbesondere eine Rohrkapillare od. dgl. angedeutet wird.

In Fig. 2 wird schematisch eine Halteschiene gezeigt, die in eine mit gekreuzter Schraffur angedeutete Betonmasse einer Decke, einer Wand od. dgl. eingebettet ist. Eine etwaige Betonarmierung ist zwar obligat, aber nicht eingezeichnet.

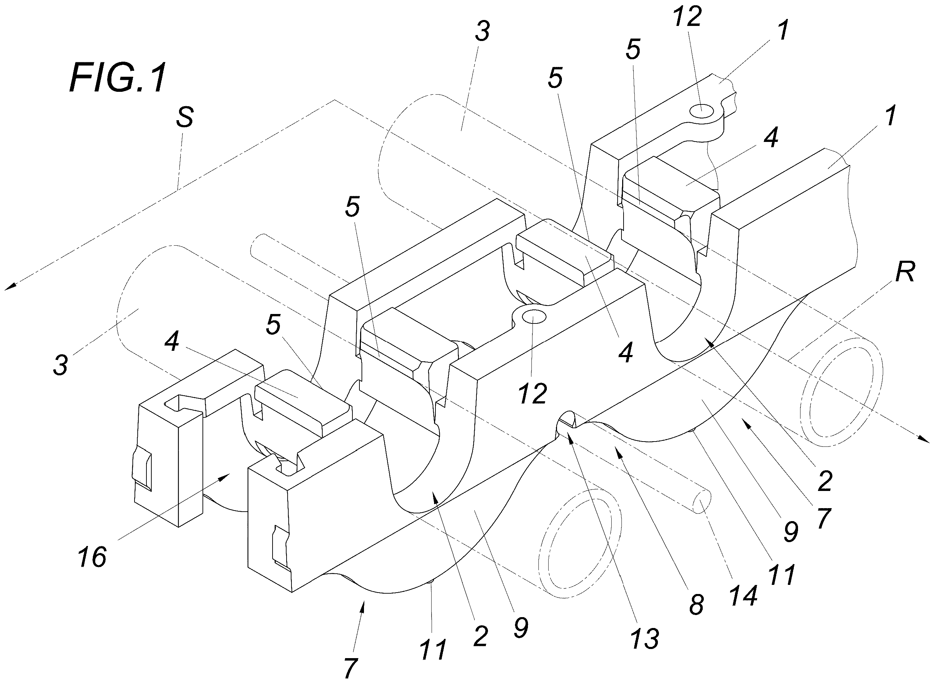

Wie dies aus Fig. 1 hervorgeht, weisen die Halteschienen jeweils an einem freien Ende einen T-förmigen Rastverbinder 15 zum form- und kraftschlüssigen Hintergreifen einer Rastaufnahme 16 einer benachbarten Halteschiene auf. Außerdem weisen die Halteschienen jeweils am gegenüberliegenden freien Ende eine von einem Rastverbinder 15 einer benachbarten Halteschiene form- und kraftschlüssig hintergreifbare Rastaufnahme 16 auf. Die Rastverbinder 15 weisen einen im Wesentlichen T-förmigen Kopf auf, wobei die Rastaufnahme 16 dementsprechend ein dazu korrespondierendes T-Profil ausbildet. Erfindungsgemäße Halteschienen können somit auf einfache Weise miteinander verbunden werden, indem diese quer zur Schienenlängsrichtung S und quer zur Rohraufnahmelängsrichtung R aufeinandergeschoben werden.

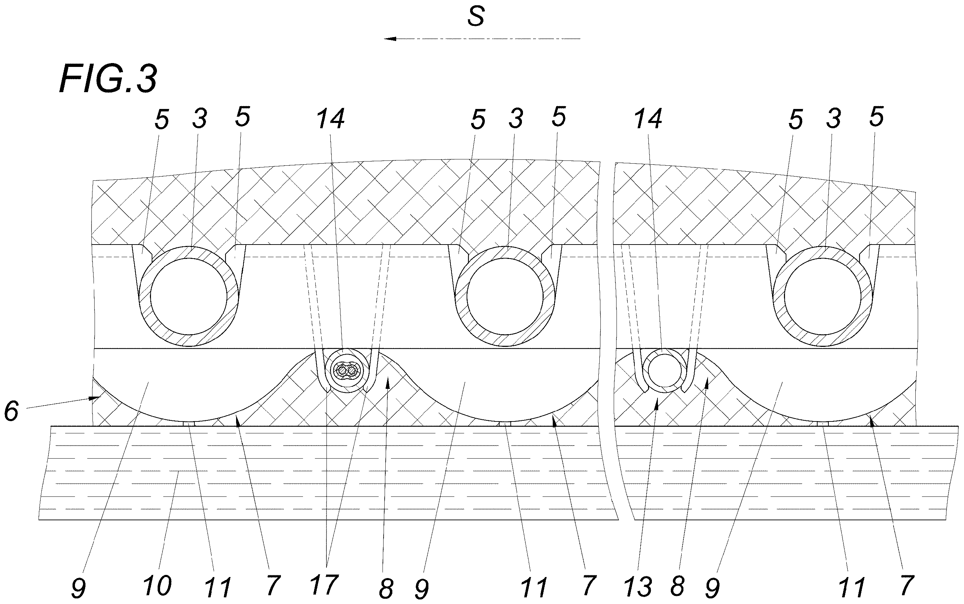

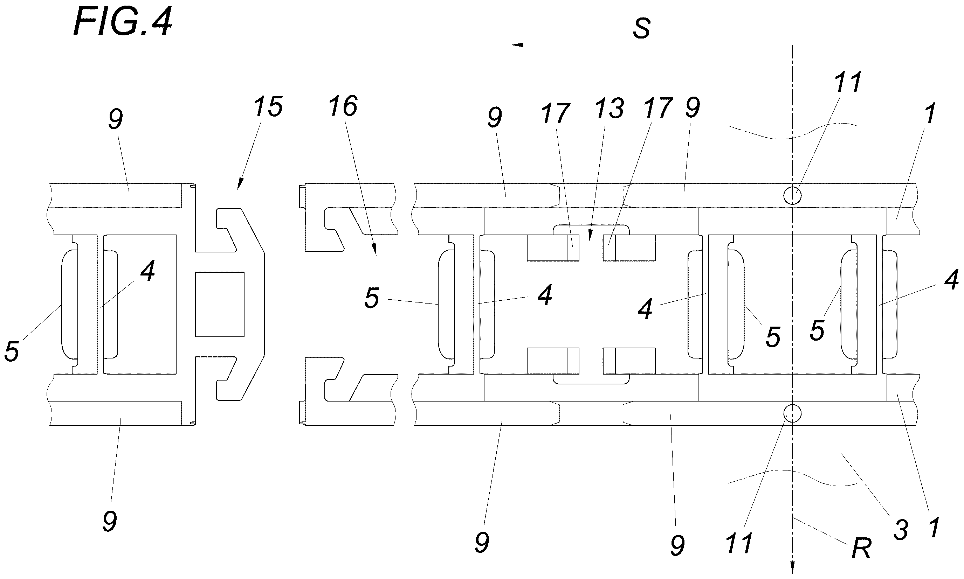

Gemäß Fig. 3 und 4 sind die Rohraufnahmen 13 von an den Längsprofilen 1 angesetzten, zwischen zwei Abstandshaltern 9 nach unten weisenden Klemmarmen 17 gebildet. Die Klemmarme 17 sind innen bzw. unten an die Längsprofile 1 angeformt und bilden je einen einseitig eingespannten Träger. Je ein Paar dieser Klemmarme 17 bildet wiederum eine Rohraufnahme 13 aus, wobei die beiden Klemmarmenden einer jeden Rohraufnahme 13 aufeinander zugebogen sind.

In die Rohraufnahmen 2 der Halteschiene sind Kernheizrohre, nämlich die Flächenheizungsrohre 3, und in die nach unten hin offene Rohraufnahmen 13 Oberflächenheizrohre 14 eingesetzt. Die in nach unten hin offene Rohraufnahmen 13 eingesetzten Oberflächenheizrohre 14 sind insbesondere Kapillarrohre, Kapillarrohrmatten (Fig. 2 u. 3 rechts) und/oder mit einer elektrischen Heizung (Fig. 2 u. 3 links) ausgestattete Heizrohre.

## Patentansprüche

1. Halteschiene für Flächenheizungsrohre (3), die zwei parallel in Schienenlängsrichtung (S) mit Abstand zueinander verlaufende Längsprofile (1) umfasst, die gemeinsam mehrere sich jeweils quer zur Schienenlängsrichtung (S) erstreckende, nach oben hin offene Rohraufnahmen (2) ausbilden und wobei jede Rohraufnahme (2) in Schienenlängsrichtung (S) von nach innen in die Rohraufnahmen (2) vorragenden Rastnasen (5) begrenzt ist, wobei die Längsprofile (1) jeweils an ihrer den Rohraufnahmen (2) gegenüberliegenden Seite einen in Schienenlängsrichtung (S) stetig wellenförmig verlaufenden Profilabschnitt (6) mit mehreren Wellenbuckeln (7) aufweisen, die jeweils Abstandshalter (9) zur Vorgabe eines Abstandes zwischen den Rohraufnahmen (2) und einer Raumfläche ausbilden, **dadurch gekennzeichnet, dass** jede Rohraufnahme (2) in Schienenlängsrichtung (S) durch genau zwei Profilquerverbinder (4) begrenzt ist, die jeweils eine nach innen in die Rohraufnahmen (2) vorragende federnde Rastnase (5) aufweisen.

2. Halteschiene nach Anspruch 1, **dadurch gekennzeichnet, dass** die zwei parallel in Schienenlängsrichtung (S) mit Abstand zueinander verlaufenden Längsprofile (1) ausschließlich über die Profilquerverbinder (4) verbunden sind.

3. Halteschiene nach Anspruch 1 oder 2, **dadurch gekennzeichnet, dass** die durch die Wellenbuckel (7) gebildeten Abstandshalter (9) jeweils im Bereich des Wellenbuckelscheitels einen, vorzugsweise zylinderförmigen, Auflagekörper (11) aufweisen.

4. Halteschiene nach einem der Ansprüche 1 bis 3, **dadurch gekennzeichnet, dass** an einem freien Ende der Halteschiene ein Rastverbinder (17) zum form- und kraftschlüssigen Hintergreifen einer Rastaufnahme (16) einer benachbarten Halteschiene vorgesehen ist, und dass am gegenüberliegenden freien Ende eine von einem Rastverbinder (17) einer benachbarten Halteschiene form- und kraftschlüssig hintergreifbare Rastaufnahme (16) vorgesehen ist.

5. Halteschiene nach einem der Ansprüche 1 bis 4, **dadurch gekennzeichnet, dass** die Halteschiene aus einem transluzenten Kunststoff gefertigt ist.

6. Halteschiene nach einem der Ansprüche 1 bis 5, **dadurch gekennzeichnet, dass** die Längsprofile (1) auf ihrer den Rohraufnahmen (2) gegenüberliegenden Seite zusätzliche, nach unten hin offene Rohraufnahmen (13) umfassen.

7. Halteschiene nach Anspruch 6, **dadurch gekennzeichnet, dass** die nach unten hin offenen Rohraufnahmen (13) von an den Längsprofilen (1) angesetzten, zwischen zwei Abstandshaltern (9) nach unten weisenden Klemmarmen (17) gebildet sind.

8. Halteschiene nach Anspruch 6 oder 7 mit in Rohraufnahmen (2) eingesetzten Kernheizrohren und mit in nach unten hin offene Rohraufnahmen (13) eingesetzten Oberflächenheizrohren (14).

9. Halteschiene nach Anspruch 8, **dadurch gekennzeichnet, dass** die in nach unten hin offene Rohraufnahmen (13) eingesetzten Oberflächenheizrohre (14) Kapillarrohre, Kapillarrohrmatten und/oder mit einer elektrischen Heizung ausgestattete Heizrohre sind.

## Claims

1. Holding rail for surface heating pipes (3), which comprises two longitudinal profiles (1) running parallel to one another at a distance in the longitudinal direction (S) of the rail, which together form a plurality of upwardly open pipe receptacles (2) each extending transversely to the longitudinal direction (S) of the rail, and wherein each pipe receptacle (2) is delimited in the longitudinal direction (S) of the rail by latching lugs (5) projecting inwards into the pipe receptacles (2), wherein the longitudinal profiles (1) each have on their side opposite the pipe receptacles (2) a profile section (6) with a plurality of corrugations (7), wherein each of these profile sections (6) extend continuously in a corrugated manner in the longitudinal direction (S) of the rail and form spacers (9) for specifying a distance between the pipe receptacles (2) and a spatial surface, **characterized in that** each pipe receptacle (2) is delimited in the longitudinal direction (S) of the rail by exactly two transverse profile connectors (4), each of which has an elastic latching lug (5) projecting inwards into the pipe receptacles (2).

2. Holding rail according to claim 1, **characterized in that** the two longitudinal profiles (1) running parallel in the longitudinal direction (S) of the rail at a distance from one another are connected exclusively via the transverse profile connectors (4).

3. Holding rail according to claim 1 or 2, **characterized in that** the spacers (9) formed by the corrugations (7) each have a preferably cylindrical support body (11) in the region of the corrugation apex.

4. Holding rail according to one of claims 1 to 3, **characterized in that** a latching connector (17) for form-fittingly and force-fittingly engaging behind a latching receptacle (16) of an adjacent holding rail is provided at one free end of the holding rail, and **in that** at the opposite free end of the holding rail a latching receptacle (16) which can be form-fittingly and force-fittingly engaged behind by a latching connector (17) of an adjacent holding rail is provided.

5. Holding rail according to one of claims 1 to 4, **characterized in that** the holding rail is made of a translucent plastic.

6. Holding rail according to one of claims 1 to 5, **characterized in that** the longitudinal profiles (1) comprise additional, downwardly open pipe receptacles (13) on their side opposite the pipe receptacles (2).

7. Holding rail according to claim 6, **characterized in that** the downwardly open pipe receptacles (13) are formed by clamping arms (17) attached to the longitudinal profiles (1) and pointing downwards between two spacers (9).

8. Holding rail according to claim 6 or 7 with core heating pipes inserted in pipe receptacles (2) and with surface heating pipes (14) inserted in downwardly open pipe receptacles (13).

9. Holding rail according to claim 8, **characterized in that** the surface heating pipes (14) inserted into downwardly open pipe receptacles (13) are capillary tubes, capillary tube mats and/or heating pipes equipped with an electric heater.

## Revendications

1. Rail de maintien pour tubes de chauffage au sol (3), comprenant deux profilés longitudinaux (1) qui s'étendent parallèlement à distance l'un de l'autre dans la direction longitudinale du rail (S), qui forment ensemble plusieurs logements de tube ouverts vers le haut (2), qui s'étendent respectivement transversalement à la direction longitudinale du rail (S), et dans lequel chaque logement de tube (2) est délimité dans la direction longitudinale du rail (S) par des crans d'arrêt (5) qui font saillie vers l'intérieur dans les logements de tube (2), et dans lequel les profilés longitudinaux (1) présentent chacun, sur leur côté opposé aux logements de tube (2), une section de profilé (6) qui s'étend en forme d'onde de manière continue dans la direction longitudinale du rail (S) et qui présente plusieurs bosses ondulées (7) qui forment chacune des entretoises (9) permettant de prédéfinir une distance entre les logements de tube (2) et une surface spatiale, **caractérisé en ce que** chaque logement de tube (2) est délimité dans la direction longitudinale du rail (S) par exactement deux raccords transversaux profilés (4) qui présentent chacun un cran d'arrêt élastique (5) faisant saillie vers l'intérieur dans les logements de tube (2).

2. Rail de maintien selon la revendication 1, **caractérisé en ce que** les deux profilés longitudinaux (1) qui s'étendent parallèlement à distance l'un de l'autre dans la direction longitudinale (S) du rail sont connectés exclusivement par l'intermédiaire des raccords transversaux de profilé (4).

3. Rail de maintien selon la revendication 1 ou 2, **caractérisé en ce que** les entretoises (9) formées par les bosses ondulées (7) présentent chacune un corps de support (11), de préférence cylindrique, dans la région du sommet de bosse ondulée.

4. Rail de maintien selon l'une quelconque des revendications 1 à 3, **caractérisé en ce qu'**il est prévu au niveau d'une extrémité libre du rail de maintien un connecteur à encliquetage (17) conçu de manière s'engager par l'arrière, par complémentarité de forme et de force, à l'intérieur d'un logement d'encliquetage (16) d'un rail de maintien voisin, et **en ce qu'**il est prévu au niveau de l'extrémité libre opposée un logement d'encliquetage (16) conçu de manière à être engagé par l'arrière, par complémentarité de forme et de force, par un connecteur à encliquetage (17) d'un rail de maintien voisin.

5. Rail de maintien selon l'une quelconque des revendications 1 à 4, **caractérisé en ce que** le rail de maintien est fabriqué à partir d'une matière plastique translucide.

6. Rail de maintien selon l'une quelconque des revendications 1 à 5, **caractérisé en ce que** les profilés longitudinaux (1) présentent des logements de tube supplémentaires ouverts vers le bas (13) sur leur face opposée aux logements de tube (2).

7. Rail de maintien selon la revendication 6, **caractérisé en ce que** les logements de tube ouverts vers le bas (13) sont formés par des bras de serrage (17) qui sont agencés sur les profilés longitudinaux (1) et qui sont orientés vers le bas entre deux entretoises (9).

8. Rail de maintien selon la revendication 6 ou 7 comprenant des tubes de chauffage central qui sont insérés à l'intérieur de logements de tube (2) et comprenant des tubes de chauffage de surface (14) qui sont insérés à l'intérieur de logements de tube ouverts vers le bas (13).

9. Rail de maintien selon la revendication 8, **caractérisé en ce que** les tubes de chauffage de surface (14) qui sont insérés à l'intérieur de logements de tubes ouverts vers le bas (13) sont des tubes capillaires, des nattes de tubes capillaires et/ou des tubes de chauffage équipés d'un chauffage électrique.
